(19) Europäisches Patentamt
European Patent Office
Office européen des brevets

(11) Publication number: 0 275 541 A1

(12) EUROPEAN PATENT APPLICATION

(21) Application number: 87119163.1

(51) Int. Cl.[4]: C03C 25/02

(22) Date of filing: 23.12.87

(30) Priority: 06.01.87 US 710

(43) Date of publication of application: 27.07.88 Bulletin 88/30

(84) Designated Contracting States: BE CH DE FR GB IT LI NL

(71) Applicant: PPG INDUSTRIES, INC.
One PPG Place
Pittsburgh Pennsylvania 15272(US)

(72) Inventor: McWilliams, Donald E.
523 Central Avenue
Pittsburgh, Pa.15238(US)
Inventor: Watson, James C.
159 Greylock Drive
Pittsburgh, Pa.15235(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

# (54) Less rigid, low or free boron glass fibers treated with amine-containing silanes.

(57) Low or free boron-containing glass fibers treated with amine functional organo silane coupling agents have a decreased performance in conforming to mold configurations over fibers having conventional amounts of boron and treated with aminefunctional organo silane coupling agents. The low or free boron-containing glass fibers treated with an amine functional organo silane coupling agent are also treated with a softening agent in an effective softening amount to overcome the additional brittleness. The softening agent in conjunction with the amine functional organo silane coupling agent provides a moisture-reduced residue on the glass fibers where the residue has a glass transition temperature of less than 30°C. The chemical treating composition can also have one or more film forming polymers, one or more lubricants, and one or more additional coupling agents. The film forming polymer has a glass transition temperature in the range of around 30°C to -20°C.

EP 0 275 541 A1

Xerox Copy Centre

# LESS RIGID, LOW OR FREE BORON GLASS FIBERS TREATED WITH AMINE-CONTAINING SILANES

This application is a continuation-in-part of Serial No. 783,882, filed October 3, 1985.

The present invention is directed to glass fibers that have glass compositions which are low in or free of boron and that have been treated with an amine functional organo silane coupling agent, where the glass fibers have reduced rigidity.

More particularly, the present invention is directed to strands of glass fibers for use in open mold processes to produce fiber reinforced plastics, wherein the glass fibers have a low or free boron composition and have been treated with an amine functional organo silane coupling agent but have reduced rigidity.

The fiber reinforced plastics (FRP) industry has depended upon glass fibers as the reinforcement for FRP products for a good number of years. For instance, in producing FRP products by an open mold process, glass fibers are: wound on mandrels, pultruded through dies, sprayed through guns, prepared into mats, chopped into strands, prepared into woven roving and weavers roving, and prepared into preformed products. In producing these myriad products, the FRP industry has been satisfied with the performance of the glass fiber as reinforcement in the various processes.

One possible stripe on this mural of satisfaction may be recent glass composition changes for the glass fibers. The glass fiber manufacturing industry has strived to reduce the relatively small amount of boron in glass fibers. Glass fibers are usually treated during their formation with chemical treating compositions containing several components to render the glass fibers more compatible with matrix resins and to protect the glass fibers from interfilament abrasion. The chemical treating compositions can have film forming polymers, one or more coupling agents, lubricants and the like. In many of the chemically treated glass fibers produced for the FRP industry, the chemically treated glass fibers have one or more amine-functional organo silane coupling agents. It has recently been observed that the low or free boron containing glass fibers treated with amine functional organo silane coupling agents in the chemical treating composition result in stiffer fibers and strands. This stiffness is compared to the glass fibers having the unreduced boron levels in the glass composition that are treated with the amine-functional silane coupling agents.

It is an object of the present invention to provide low or free boron glass fibers treated with chemical treating compositions having amine-containing organo functional silane coupling agents, where the treated fibers are less rigid. These treated fibers find particular suitability for use in open mold fiber reinforced plastic production.

## SUMMARY OF THE INVENTION

Accordingly, the foregoing and other objects are provided with the chemically treated glass fibers of the present invention. The glass fibers that have a low amount or no amount of boron and that have a chemical treating composition having an amine-containing organo functional silane coupling agent also have in the chemical treating composition a softening agent. The softening agent can range from modified components already present in the aqueous chemical treating composition to additional components. When one or more film forming polymeric components are already present in the chemical treating composition, the polymer can be a more flexible polymer than previously present or a more flexible film forming polymer can be added or plasticizers can be added. In lieu of or in addition to such an approach, an additional component can be present in the chemical treating composition which is a softening agent. External plasticizing materials can be added directly as a component in the aqueous chemical treating composition or they can be blended as external plasticizers or incorporated as internal plasticizers with a film forming polymeric material. The amount of the softening material present is an effective amount to compensate for any additional amine crosslinking because of any lack of association between the amine functionality of the organo silane coupling agent and the glass surface due to the absence of or the reduction in the boron concentration in the glass.

Low or free boron containing glass fibers that are useful for spray-up gun roving are provided wherein the glass fibers have a chemical treating composition having amine-functional organo silane coupling agents with less rigidity by the presence of an effective amount of internal and/or external plasticizer for the film forming polymer. Film forming polymers typically used in spray-up gun roving applications include poly-(vinyl acetate) homopolymers and copolymers. Plasticizers are included with the poly(vinyl acetate) to give a Tg of less than 30°C, but where the Tg of the polymer is greater than 0°C, the polymer is one having a solubility in an organic solvent of greater than 60 percent. So those polymeric film formers with the higher

Tgs also have correspondingly higher solubilities in an organic solvent. Any additional components of a chemical treating composition for glass fibers traditionally utilized can also be utilized in the presence of the softening modifier of the present invention. Also the amount of the amine-functional organo silane coupling agent present on the boron-free or boron-reduced glass fiber need not be reduced from the amount present on boron-containing glass fibers.

## Brief Description of the Drawing

Figure 1 is a three dimensional plot of a combination of film forming polymers useful as the softening agent in the present invention.

## Detailed Description of the Invention

The present invention is based on the realization that the absence of boron or the reduced quantity of boron on the glass surface also reduces the degree of association between the glass surface and the amine groups in the amine functional organo silane coupling agents of the chemical treating compositions applied to the glass fibers. This reduced association makes available additional amine groups of the organo silane coupling agent. The increased quantity of amine groups can increase the degree of crosslinking in the film coating of the chemical treating composition on the glass surface, thereby making the chemically treated glass fiber more inflexible or rigid. To overcome this additional rigidity while maintaining other properties of the chemically treated glass fibers, one or more softening agents are incorporated into the chemical treating composition. The kind and amount of softening agent gives a dried film of the aqueous chemical treating composition having a glass transition temperature (Tg) in the range of around 30°C to -20°C. When the Tg in this range is greater than 0°C, the dried film also has a solubility in an organic solvent of greater than around 60 percent.

Any fiberizable glass batch composition can be used in the present invention that results in glass fibers having low amounts of or no amounts of boron. Typically, glass fibers are formed with "E-glass" or "621-glass". The former has a composition having from 5 to 12 percent boron in some boric oxide form or boron anhydride form. The "621-glass" has an amount of boric oxide and fluorospar in the batch composition in a combined range of around 8 to 13 percent with the fluorospar being present up to 3 percent. Any glass fiber with boron levels lower than those of "E-glass" or "621-glass" can be used in the present invention and benefit from the present invention. Glass compositions with lower or no amounts of boron known in the industry include those of the following U.S. Patents: 4,542,106; 4,026,715; 3,876,481; 3,849,627; 3,929,497; 4,199,364; 3,095,311; 3,847,626. Glass fibers with no or low amounts of boron, when treated with a chemical treating composition having one or more amino functional organo silane coupling agents, will exhibit increased rigidity of the chemically treated glass fiber. A suitable glass fiber composition for use in the present invention is that of U.S. Patent 4,542,106, hereby incorporated by reference describing a composition having: 58% to 60% $SiO_2$, 11% to 13% $Al_2O_3$, 21% to 23% CaO, 2% to 4% MgO and 1% to 5% $TiO_2$, all as percent by weight of the glass fiber composition. The glass fibers may also contain alkali metal oxides, sodium or potassium being preferred and calculated as sodium oxide. These oxides are present at a level of up to 1% by weight of the glass fiber composition. Such fibers are further characterized by having a seed count of 5 seeds or less per cubic centimeter and an electrical current leakage value of 2.8 nanoamperes or less when subjected to the electrical leakage test herein described.

More particularly, the range of $TiO_2$ in the above-mentioned glass composition is between 1 and 1.8 with the other constituents and properties remaining in the above stated ranges.

In the most preferred embodiment of the instant invention, the glass fibers consist essentially of: 59% $SiO_2$, 12.1% $Al_2O_3$, 22.6% CaO, 3.4% MgO and 1.5% $TiO_2$. This latter composition can also have present alkali metal oxide, preferably sodium oxide at 0.9%. Fibers of this composition are characterized by having an electrical leakage of 2.2 nanoamperes or less by the electrical leakage test described in U.S. Patent 4,542,106 and a seed count of less than 5 seeds per cc of glass.

All of the above described glass fibers may also include in their composition $Fe_2O_3$ in trace quantities, since it is normally introduced as an impurity in the $SiO_2$, $Al_2O_3$, and CaO batch materials. If present it is typically in the 0.2 to 0.3% range by weight of the composition.

The aforementioned types of glass fibers are prepared in the conventional manner by blending the raw materials used to supply the specific oxides that form the composition of the fiber. Thus, for example, sand is used for $SiO_2$, clay for $Al_2O_3$, lime or limestone for the CaO, dolomite for the MgO and some of the CaO,

and $TiO_2$ can be supplied as pigment grade $TiO_2$ or as rutile, pigment grade $TiO_2$ being preferred. After the ingredients are mixed in the proper quantities to provide the desired weight of each constituent for the desired glass, the batch is melted in a conventional fiber glass furnace and the resulting molten glass is passed along a conventional forehearth and into glass fiber forming bushings located along the bottom of the forehearth. The molten glass is drawn through a plurality of holes in the bottom of the bushing to form the glass fibers.

The amine-functional organo silane coupling agents used in the present invention can be mono amino or polyamino and are monomeric in nature and are well known to those skilled in the art. These organo silane coupling agents have at least one water hydrolyzable functional group attached directly to the silicon atom of the silane and at least one organo functional group connected directly to the silicon atom of the silane through a carbon to silicon bond. In addition, the amino functional or amine functional organo silane coupling agents have at least one amine functional group. The water hydrolyzable functional groups of the silane are available for bonding with the surface of the glass fibers while the amine functional groups are available for bonding to matrix polymers and possibly a film forming polymeric material present in the chemical treating composition.

The amino-functional silanes can be described in greater detail as being represented by the formula

$$\begin{array}{ccc} & B & \\ A & Si & C \\ & B & \end{array}$$

wherein A is the water-hydrolyzable functional group, C is the organic group containing the amino-functional group, and each B can be either A, C, or an alkyl group, preferably containing from one to five carbon atoms. Examples of group A include hydroxyl, halogen such as Cl or F, alkoxy, preferably containing from one to five carbon atoms, acryloxy, e.g., phenoxy or naphthoxy and acetoxy. Examples of group C include aliphatic and aromatic groups, in which the amine function can be primary, secondary, or tertiary.

For example, the C group can have one or more amine groups and an alkylene group, $-(CH_2)_xNH_2$, wherein x is an integer of from 2 to 12, but preferably 3 to 9; $--(CH_2)_uNH(CH_2)_zNHR$, wherein y is an integer of from 2 to 4, and z is an integer of from 1 to 4, and R is hydrogen, methyl or ethyl; and $--(CH_2)_x--N(CH_3)_2$, wherein x has the same meaning as before. Preferred silanes include: gamma(alkylene diamine) alkyl trialkoxy silanes, omega aminoalkyltrialkoxy silanes, such as gamma-aminopropyltriethoxy silane, meta and para aminophenyltriethoxy silane, and N,N-propyl trimethoxysilyl) ethylene diamine.

In addition to the monoamino or polyamino functional organo silane coupling agent, the chemical treating composition used to treat the glass fibers during or subsequent to their formation can have additional components. Such additional components usually include a film forming polymeric material usually present as an aqueous emulsion or dispersion, one or more nonionic and/or cationic fiber lubricants, additional silane coupling agents with functionalities other than amino such as epoxy, vinyl, methoxy and the like.

Nonexclusive examples of the film forming polymers include: the aqueous dispersions of synthetic resins made by aqueous emulsion polymerization of ethylenic monomers either in homopolymeric or copolymeric form where examples of the ethylenic unsaturated monomers include vinyl chloride, styrene, acrylonitrile, chlorovinyl acetate, butadiene, vinylidene chloride and various copolymers of the above monomers such as butadiene-styrene, butadiene acrylonitrile, vinyl chloride-vinyl acetate copolymers, and like materials. These materials are usually employed in latex form in aqueous dispersions as binders, where the particle size of the latices is in the range of about 0.1 to 5 microns.

Further nonexclusive examples of the film forming polymers include: poly(vinylacetate), poly(vinyl alcohol), unsaturated and saturated polyesters, epoxy polymers, vinyl pyrrolidone, resorcinol formaldehyde resins, melamine formaldehyde resins, acrylic polymers, methacrylic polymers, phenolic formaldehyde resins, polyacrylamide resins, polyamide resins, polyurethane resins and the like.

The chemically treated glass fibers of the present invention have a chemical treatment having a softening material to provide at least a near continuous film of the moisture-reduced residue of the chemical treating composition on the surface of the glass fibers, wherein the film has a glass transition temperature in the range of around 30 to -20°C. When the Tg of the film is greater than 0°C and up to 30°C, the film has a solubility in an organic solvent of greater than around 60 percent. The glass transition temperature can be measured on the film by any method known to those skilled in the art. The solubility of the film in an organic solvent is measured in organic solvents that provide an environment similar to the environment of

use for the film-containing glass fibers. For instance, like a resin matrix environment experienced by the glass fibers in fiber reinforced plastics. The carrier-containing solution of the softening agent and amine functional organo silane coupling agent is spread on a clean surface like glass, aluminum foil or trays, or cellophane foil with a doctor blade. The coated plate is placed in a forced air oven at a temperature below the boiling point of the carrier for volatilization purposes. The finished film is pulled from or washed from the surface. The solubility may be evaluated by mixing a small quantity of the film with a series of organic solvents in Erlinmeyer flasks. Interactions at room temperature and at the boiling point of the solvent, and after a heating period are observed as a qualitative test. The quantitative basis is achieved by isolating any insoluble phase. Also a Soxhlet extraction apparatus can be used to evaluate the solubility of the film. Here the quantity of film, its state of subdivision, and the number of extraction cycles are standardized. Two suitable organic solvents for evaluation of the solubility are styrene and acetone.

The softening material can be flexibilizing segments built into the film forming polymer backbone such as ethylene oxide and/or propylene oxide segments or epoxy (oxirane) segments or can be the use of additional components in the chemical treating composition such as plasticizers. With the use of the plasticizers, these materials may be internal plasticizers or external plasticizers. The internal plasticizers are those built into one or more of the components of the chemical treating composition, for instance, the film forming polymers. Also the softening material can comprise a lower molecular weight film forming polymer utilized in the chemical treating composition. The preferred plasticizing agents are the phthalate esters such as: dioctyl phthalate, dibutyl phthalate and diiosoctyl phthalate, although other plasticizers may be used, nonexclusive examples of which are tricresyl phosphate, and the like.

A suitable internally plasticized film forming polymer for use as the softening agent is a poly(epoxy vinylacetate) copolymer. Such a copolymer is available from National Starch, Bridgewater, NJ under the trade designation NS-1971. This copolymer is of the monomers glycidol methacrylate and vinyl acetate in an amount of two parts of the former for 100 parts of the latter monomer. In its commercial form, the copolymer is in a 53 percent solids emulsion having particle sizes in the range of about 0.2 to about 3 microns. Other examples of useful epoxidized polyvinylacetate copolymers are Resyn N SR 3362-53 from National Starch and PN-3013 available from H. B. Fuller Company. The internally plasticized film forming polymeric softening agent can be used alone or in combination with other internally or with externally plasticized polymeric softening agents or in combination with other film forming polymers. The epoxidized polyvinyl acetate copolymers generally have Tgs greater than 0°C, but they have very good solubility in organic solvents. For instance, the NS-1971 epoxidized polyvinyl acetate copolymer has 100% solubility in styrene and acetone.

Preferably, the softening agent of the present invention is a blend of the epoxidized polyvinyl acetate copolymer, an externally plasticized poly(vinyl acetate) polymer and an unplasticized polyvinyl acetate homopolymer. The ratios of the blend can be any that give a total point in the spray-up test like that of Table 2, infra, greater than that achieved by polyvinyl acetate used alone. Figure 1 shows a three dimensional statistical analysis based on ten experiments with different ratios of the three aforementioned polymers. The data from the ten experiments were statistically analyzed by a regression analysis to generate the three dimensional plot of Figure 1. The y-axis of Figure 1 is the total points generated in spray-up testing as presented in Table 2. The V1 and V2 axis are transformational to generate the three dimensional plot of Figure 1. In Figure 1, point A depicts the presence of only poly(vinyl acetate), point B depicts the presence of only epoxy polyvinylacetate copolymer, and point C depicts the presence of only externally plasticized polyvinylacetate.

The upper limit on the amount of softening agent present either as internally plasticized or externally plasticized components is that amount which results in treated glass fibers that are too tacky, too fluffy for processing and that have no integrity between the fibers. The use of large amounts of external plasticizer with poly(vinyl acetate) homopolymer will start to approach such an upper limit. Point C in Figure 1 is a worthwhile softening agent amount when external plasticization is used, but tackiness starts to develop at this degree of softness imparted to the glass fibers.

Nonexclusive examples of the lubricants that may be present in the instant invention are the cationic-active, acid solubilized, fatty acid amides, where the fatty acid amide can be saturated or unsaturated and wherein the acid group contains from about 4 to about 24 carbon atoms. Also included are anhydrous, acid solubilized polymers of lower molecular weight unsaturated fatty acid amides. Another example of a lubricant is an alkyl imidazoline derivative which includes compounds of the class U-alkyl N-amidoalkyl imidazolines which may be formed by causing fatty acids to react with polyalkylene polyamines under conditions which produce ring closure. The reaction of tetraethylene pentamine and stearic acid is exemplary of such reaction. The chemical treating composition also has a carrier in a predominant portion of the chemical treating composition to enable the chemical treating composition to be applied to the glass

fibers. Another type of lubricant that can be present includes hydrogenated vegetable oils like cottonseed oil, corn oil, and soybean oil.

Other components that may be present in the aqueous chemical treating composition are wetting agents and other cationic agents. Examples of suitable nonionic wetting agents include polyalkylene derivatives of esters, fatty acids, fatty alcohols, fatty amides, alkyl phenyl ethers and other derivatives. A particular nonionic wetting agent that can be used is polyethylene glycol 600 monolaurate which is shown to be effective in a range of 40 to 100 percent by weight based on the weight of the lubricant in the sizing composition. Cationic agents which can be included in the composition such as cetyl or stearyl monoamine hydrochloride or acetate, decylamine, hexadecylamine and secondary and tertiary derivatives of the same, for example, dodecyl methylamine and salts thereof. Quaternary ammonium compounds such as trimethylstearyl ammonium bromides and chlorides and generally any of the amine compounds which dissociate in aqueous systems to provide a positive radical containing a group of more than 10, preferably 12 or more carbon atoms can be employed.

Another class of coupling agents which are useful are the basic (hydroxy containing) metal salts of a strong mineral acid, such as, for example, a basic chromium chloride, basic chromium sulfate, etc. These compounds are ones having a trivalent metal ion selected from the group consisting of chromium cobalt, nickel, copper and lead, at least one hydroxyl group attached to the metal, and at least one anion of a strong mineral acid attached to the metal (as well as coordinate complexes of these compounds and mixtures thereof).

Another type of coupling agent which is used in the practice of this invention is a complex compound of the Werner type in which a trivalent nuclear atom, such as chromium is coordinated with an organic acid such as methacrylic acid, i.e., a methacrylic acid complex of chromic chloride. Such agents are described in U.S. Patent No. 2,611,718. Other Werner type coupling agents having vinyl alkyl amino, epoxy, mercapto, thioalkyl, thio-alkaryl, and phenyl groups are suitable for incorporation in the size of the invention. Mixtures of two or more of any of these coupling agents may be used.

A liquid carrier to be used in the instant invention, for example, includes water. The amount of water in the chemical treating composition makes the composition an aqueous chemical treating composition to give an effective total solids content. Such a content gives a resultant viscosity to allow the aqueous chemical treating composition to be applied to glass fibers. The aqueous chemical treating composition usually has a viscosity of around 0.6 to about 50 centipoise at 60°C or less. Particularly, the amount of water present in the aqueous chemical treating composition is sufficient to give a total solids (nonaqueous) content of the aqueous treating composition in the range of about 1 to about 30 weight percent and preferably from about 2 to about 15 weight percent of the aqueous chemical treating composition.

A suitable example of an aqueous chemical treating composition of the present invention is one suitable for producing glass fibers for utilization in the spray-up process of producing fiber glass reinforced plastics. The aqueous chemical treating composition has a polyvinyl acetate film forming polymer which is plasticized to give a film where just the polyvinyl acetate has a glass transition temperature in the range of 0 to -20°C and preferably -10 to -20°C. The aqueous chemical treating composition also has a fatty acid lubricant, methacrylato chromic chloride and gamma (ethylene diamine) propyltrimethoxy silane. The sizing mixture preferably has sufficient quantities of the ingredients to provide a formulation having 7 to 7.5 percent by weight solids and a pH in the range of around 6.1 to 6.5. The plasticized polyvinyl acetate film forming polymer present as an emulsion polymerization latex usually having a solids content of around 40 to 60 weight percent is present to give a polyvinyl acetate content of the aqueous chemical treating composition in the range of around 70 to 90 weight percent of the total solids of the aqueous chemical treating composition. The lubricant is present usually in an amount of around 4 to 7 weight percent of the solids and the coupling agents are usually present in an amount of around 2 to 6 weight percent of the solids. Additional information concerning the components of the aqueous chemical treating composition other than the plasticized film forming polymer are available in U.S. Patent 3,933,711, hereby incorporated by reference. The aqueous chemical treating composition can be formed and applied to the glass fibers in a manner taught in U.S. Patent 3,933,711.

PREFERRED EMBODIMENT OF THE INVENTION

Using the standard melting techniques already referred to, a low $TiO_2$ glass batch, free of both fluorine and boron is melted and formed into fibers. The melted glass before exit to the refiner and associated forehearth is at 2550°F (1399°C) and has been held at this temperature for an average of 8 to 16 hours. This glass at exit will have a seed count of about 12 seeds per cc. Fibers drawn from glass so formed typically will have a seed count of less than 5 seeds per cubic centimeter and have the following chemical composition.

Glass Composition

| Ingredients | % by Weight of Composition |
|---|---|
| $SiO_2$ | 59 |
| $Al_2O_3$ | 12.1 |
| $Fe_2O_3$ | 0.2 |
| CaO | 22.6 |
| MgO | 3.4 |
| $Na_2O$ | 0.9 |
| $TiO_2$ | 1.5 |

Glass fibers having the above composition and seed count and the molten glass producing them were tested to determine various physical properties and typical values that were obtained are shown in Table I.

Table I

| Physical Properties | |
|---|---|
| Liquidus Temperature (°F) | 2100 |
| Softening point °F | 1646 |
| Refractive Index | 1.57 |
| Density | 2.67 |
| Temperature at Log 2 viscosity (°F) | 2639 |
| Temperature at Log 3 viscosity (°F) | 2281 |
| Tensile strength (psi) | 500,000 |

The properties obtained from the novel glass composition are excellent from a glass fiber forming standpoint since there is a 181°F differential between the liquidus temperature and the temperature corresponding to a viscosity of Log 3.0. It is desirable to maintain a safe range between these two temperatures to avoid crystallization in the molten glass during the fiber drawing process. The preferred glass of the instant invention maintains this differential between liquidus temperature and temperature at Log 3 at 150°F or higher. The softening point of this glass is measured typically at 1646°F while previous measurements of a 621 glass indicate a 1545°F softening point. The fibers with higher contents of $TiO_2$ are, of course, less desirable in their liquidus-viscosity relationship than the preferred composition and therefore, require more control during forming.

The glass fibers of the aforedescribed composition are treated during their formation with an aqueous chemical treating composition having an aminofunctional organosilane coupling agent. The aqueous chemical treating composition has:

| | Parts by Weight |
|---|---|
| (grams) | |
| Preferably epoxidized polyvinyl acetate NS-1971 used as the sole film forming polymeric softening agent or alternatively plasticized polyvinyl acetate (film former 56 percent solids in water to give a film Tg of -10 to -20°C blended with polyvinyl acetate homopolymer in 50:50 or 33:67 ratios | 4500 |
| 1. Volan (Werner complex of methacrylic acid chromic chloride 19 percent solids in isopropanol) | 334 |
| 2. Gamma (ethylene diamine) propyl trimethoxy silane in methanol (40 percent volume by wt.) Z-6026 | 226 |
| 3. Cationic fatty acid amide (Emery 4046D) | 24 |
| 4. Pelargonic acid amide of tetraethylene pentamine (C-185A) | 112 |

Water (sufficient to provide 10 gallons of size mix)
Acetic acid - amount necessary to control pH at 6.3 ± 0.2

1. "Volan" methacrylic acid complex of chromic chloride sold by E. I. Dupont.
2. Z-6026 - methanolic solution of gamma (ethylene diamine) trimethoxy silane sold by Dow Corning.
3. Emery 4046D - cationic fatty acid amide sold by Emery Industries.
4. C-185A - pelargonic acid amide of tetraethylene pentamine sold by Imperial Chemical Industries.

The size preparation listed above are prepared by mixing the epoxidized polyvinyl acetate and polyvinylacetate and plasticized polyvinyl acetate dispersions used alone or in any blend of two or more with around 35 percent of the total water to be used in preparing the final size solution volume. The gamma (ethylene diamine) propyl trimethoxy silane is then mixed with a small quantity of cold water and added to the mixing tank followed by the addition of the anti-static agent. The cationic fatty acid amide and the pelargonic acid amide of tetraethylene pentamine are mixed in hot water and added to the size ingredients with continuous mixing. The mixing tank is then diluted to the final volume of 10 gallons. The pH is then measured and acetic acid is added in sufficient quantity to control the pH at 6.3 ± 0.2. It is preferred that the pH of the final size be maintained at 6.3.

After mixing the forming size, it is applied to the individual glass fibers during their formation. The size is applied to the individual fibers after they emerge from the orifices in the electrically heated platinum alloy bushing containing the molten glass and the size is applied to the filaments prior to the time they are grouped together to form a strand by means of a roller applicator such as the type shown in U.S. Patent No. 2,728,972. The fibers are collected on a collet operating at speeds of about 6,000 revolutions per minute and the roller applicator speed is maintained at approximately 145 revolutions per minute. The forming packages are baked for a period of 11 hours at 240°F. or any equivalent time temperature relationship and are then placed on an appropriate balloon creel and wound on a roving winder to provide a

fiber glass roving product containing the dried residue of the aqueous size composition placed on the fibers during formation. The dried residue on the glass fibers represents a coating of between 1.21 and 1.61 percent by weight basis the bare glass. Roving produced by fibers sized with this quantity of the sizing of the instant invention has been found particularly effective in producing spray-up fiber glass reinforced resin products.

## EXAMPLES

Sizing compositions similar to that of the preferred embodiment were formulated with differing amounts of external plasticization for the poly(vinyl acetate) film forming polymer. The different external plasticization amounts gave glass transition temperatures for the dried film for the plasticized polyvinyl acetate latex ranging from -1 to -16°C. In addition, three illustrative examples of a sizing composition having a plasticized polyvinyl acetate film forming polymer with a glass transition film greater than 0°C were prepared. Also a sizing composition of the preferred embodiment with epoxidized polyvinylacetate was formulated as Examples 4 and 5. A sizing composition was formulated with the 67:33 blend of polyvinylacetate homopolymer and externally plasticized polyvinyl acetate polymer having a Tg of -16°C as Examples 4A and 5A. Also two illustrative examples like Illustrative Example 1 were run with Examples 4 and 4A and Examples 5 and 5A respectively. All of these aqueous chemical treating compositions were applied to glass fibers having the glass composition similar to that of the preferred embodiment. In addition, an aqueous chemical treating composition of unplasticized polyvinyl acetate was applied to 621 glass fibers. The formulations, glass transition temperatures and glass composition of the glass fibers for these examples are listed in Table 1.

Table 1

| Experiment | Poly(vinylacetate) Plasticized to Get a Tg in °C | Glass Fiber Composition |
|---|---|---|
| Example 1A | -16 | Boron-free |
| Example 1B | -16 | Boron-free |
| Example 1C | -16 | Boron-free |
| Example 2 | -1 | Boron-free |
| Illustrative Example 1 | No plasticization | 621-glass |
| Illustrative Example 2 | +10 | Boron-free |
| Illustrative Example 3A | +2 | Boron-free |
| Illustrative Example 3B | +2 | Boron-free |
| Example 4 | +14 100% soluble | Boron-free |
| Example 4A | 67% - +10°C<br>33% - -16°C | Boron-free |
| Example 5 | + 14 100% soluble | Boron-free |
| Example 5A | 67% - +10°C<br>33% - -16°C | Boron-free |

The chemically treated glass fibers of Table 1 were tested for improvement in flexibility of the

chemically treated glass fiber strand while maintaining good chopping properties in a spray-up operation. The results are presented in Table 2.

## Table 2

**Spray-up Roving Performance with Polyester Matrix**

**Tg of Plasticized Poly(vinylacetate) on Glass Fibers**

**Properties of Spray-up Roving**

| Example Chopped Treated Strand Properties: | Ill. Eg. 1 | Eg. 1C | Ill. Eg. 2 | Eg. 3A | Ill. Eg. 3B | Eg. 1 | Eg. 1B | Eg. 2 | E-Glass Ill. Eg. 4 | Eg. 4 | Eg. 4A | Eg. 5 | Eg. 5A | Ill. Eg. 5 |
|---|---|---|---|---|---|---|---|---|---|---|---|---|---|---|
| A Chopping Properties | 4 | 4 | 4 | 4 | 4 | 3 | 3 | 4 | 4 | 4 | 4 | 4 | 4 | 4 |
| B Fan Pattern | 4 | 4 | 4 | 4 | 4 | 3 | 3 | 4 | 4 | 4 | 4 | 4 | 4 | 4 |
| C Fiber Fall-Out | 4 | 4 | 4 | 4 | 4 | 4 | 4 | 4 | 4 | 4 | 4 | 4 | 4 | 4 |
| D Fiber Fly | 4 | 4 | 4 | 4 | 4 | 4 | 4 | 4 | 4 | 4 | 4 | 4 | 4 | 4 |
| E Fiber Laydown | 4 | 4 | 4 | 4 | 4 | 3+ | 3+ | 4 | 4 | 4 | 4 | 4 | 4 | 4 |
| F Wet-Thru | 5 | 5 | 4 | 5- | 3+ | 4+ | 4+ | 4+ | 4 | 5 | 5- | 5- | 5- | 5- |
| G Wet-Out | 5 | 5 | 3 | 5 | 3- | 5 | 5 | 5 | 5 | 5 | 5 | 5 | 5 | 5 |
| H Conformity | 4 | 4- | 3- | 3+ | 3+ | 3+ | 4 | 4 | 4- | 4- | 4- | 4- | 4- | 4- |
| I Springback | 5 | 4 | 2- | 3+ | 2+ | 2+ | 5 | 3- | 5 | 5 | 5 | 5 | 5 | 5 |
| J Air Ent. and R.O. | 4 | 4 | 2- | 3+ | 2+ | 2+ | 3 | 4- | 3- | 4- | 3 | 4 | 4 | 4 |
| K Vertical Hold | 5 | 5 | 5 | 5 | 5 | 5 | 5 | 5 | 5 | 5 | 5 | 5 | 5 | 5 |
| TOTAL | 48 | 47- | 38- | 45 | 39+ | 39+ | 44 | 44- | 45 | 47 | 46 | 47 | 47 | 47.5 |

The tests conducted in Table 2 were obtained from an actual spray-up procedure in an unfilled resin system to measure the spray-up characteristics of the fiber glass rovings. The ratings 1-5 with 1 as unsprayable and 5 being excellent are shown for each test characteristic. The apparatus and materials including the polyester resin and catalyst, conditioning and preparation of test specimens were conducted in a similar manner. The laminate was prepared by using a mylar film covering flat panel spray-up mold. After wet thickness, width and length of wet laminate are obtained, the mylar film is folded around wet laminate and tape so that the glass/resin will be contained for press curing. The conditions maintained constant during the spray-up evaluation were: air chopper pressure, resin pressure to yield around 18 percent glass in field systems and 28 percent in nonfield systems, resin viscosity, resin temperature, catalyst pressure to deliver 1 percent methyl ethyl ketone, cot and blade conditions, area temperature and humidity as constant as possible around 65 to 75°F and 55 to 65 percent relative humidity. The rating of 2 means poor, the rating of 3 means fair and the rating of 4 means good. For the chopping property characteristic, the chopping difficulty and cut glass appearance during spray-up (long lengths and matched sticks) are determined. The rating of 4 means less than 10 percent long lengths of glass in excess of chopper setting and the rating 3 means 10 to 15 percent long lengths of glass in excess of chopper setting. The glass fan pattern characteristic measures the distribution of glass as it mixes with the resin prior to hitting the mold surface. (The width of the resin fan has some effect on this property.) The rating of 5 means the glass breaks up very well and fibers cover 90 percent of the resin stream while a rating of 4 means satisfactory glass breakup and a 75 percent coverage of the resin stream and a rating of 3 means the glass breaks up but covers only 50 percent of the resin stream. The fiber fall characteristic is a measure of the chopped lengths of glass which fall through or away from the resin stream as the material is being sprayed. (It should be noted that the static, humidity and resin tip angle can have an effect on this property.) The rating of 5 means that no chopped glass was noticed below the resin stream, and the rating of 2 means 2 percent or less quantity of fibers falling out of the resin stream and a rating of 3 means 5 to 10 percent of the fibers passing through or away from the resin stream. The fiber fly characteristic is a measure of the broken filaments which are noticed in the area during spray up. These fibers are very noticable at all contact points, especially the chopper guide eyes. The rating of 5 in this test means there are no broken filaments reserved in the air during spraying while a rating of 4 means very few are observed and a rating of 3 is a moderate level of broken filaments are observed. The fiber lay-down characteristic is a measure of the tendency of the chopped glass fibers to lay against the mold surface. A rating of 5 in this characteristic in a case the chopped glass lays down smoothly with good distribution of fluffiness or hay stacking, and a rating of 4 indicates very slight hay stacking and fluffiness, and a rating of 3 indicates a moderate level of hay stacking and fluffiness. The wet-through characteristic is a measure of the ability of the resin to penetrate the chopped glass as it is being rolled out. The glass content must be held constant during comparison of different glass in this evaluation. The rating of 5 indicates excessive resin on the surface of the laminate and a rating of 4 is a moderate level of resin on the laminate surface and a rating of 3 is very little resin on the surface but all glass is covered. The wet-out characteristic is a measure of the ability of the glass to absorb the resin/catalyst immediately after roll-out. A rating of 5 in this characteristic indicates no dry strands in the laminate after curing, and a rating of 4 indicates 5 dry strands visible in a 1 square inch section after the laminate has cured, and a rating of 3 indicates 5 to 20 dry strands visible in a 1 inch section. The conformity characteristic is a measure of the ability of the chopped strands to conform to curved radii or to lay down smoothly. A rating of 5 in this characteristic indicates no strands protruding from the laminate after roll-out, and a rating of 4 indicates three strands per linear foot of radii observed sticking up in the laminate after roll-out, and a rating of 3 indicates 4 to 8 strands per linear foot of radii. The spring-back characteristic measures the tendency of glass fibers to break away from the mold surface. This normally occurs when the glass mass has hard strand or will not wet-out. A rating of 5 in this characteristic indicates the defect cannot be found, and a rating of 4 indicates one area no more than about one half inch square can be found in a five inch section, and a rating of 3 means between 1 and 3 half inch squares can be found in the same area. The air entrapment and roll-out (r.o.) characteristic is a measure of the ease with which the glass can be rolled in the resin immediately after spraying. It reflects any problems that are encountered with air removal due to entrapped bubbles. A rating of 5 in this characteristic indicates easy roll-out with no visible air in the laminate, and a rating of indicates slight air entrapment which can be removed with rolling and a rating of 3 indicates slight air entrapment which cannot be removed with rolling. The vertical hold characteristic measures the tendency of glass fibers to maintain contact with a 105 degree vertical surface and not fall or release from the mold surface after spray-up. (A 25 to 30 percent unfill and a 15 to 18 percent filled glass content should be maintained). A rating of 5 in this characteristic indicates no movement of glass until the laminate is cured, a rating of 4 means the laminate has no more than a 1/8″ movement

until cured and a rating of 3 indicates the laminate moves between 1/8" and 1/2" during cure.

Table 2 shows the improvement of the use of boron-free glass fibers having a chemical treatment of an amino functional organo silane coupling agent with a film forming polymer plasticized to have a Tg of less than 0°C or a Tg greater than 0°C with 100% solubility for the total rating of strands chopped from roving. The total for the illustrative example number 1 is 48 which is a boron-containing glass fiber 621 glass treated with the chemical treatment of U.S. Patent 3,933,711. Illustrative Example 2 shows boron-free glass fibers treated with the chemical treatment like that of 3,933,711 and the total performance value falls off the 38. Illustrative examples 3a and 3b indicate that where a film forming polymer having a Tg greater than 0 is utilized in the chemical treatment on boron-free glass fibers, the total performance figure ranges somewhere between 39 and 45. The examples of Table 2 show when the film forming polymer that is used in the chemical treatment on boron-free glass fibers has a Tg in the range of less than 0°C or greater than 0°C with 100% solubility gives total performance figure ranges from 44 to 47 which is approaching the 48 of the boron-containing glass fibers.

## Claims

1. Strands of chemically treated glass fibers, comprising:

a) low or free boron-containing glass fibers,

b) moisture-reduced residue as a near continuous film on the glass fibers of a chemical treating composition, having:

1) amine functional organo silane coupling agent in an effective coupling agent amount,

2) softening agent selected from the group consisting essentially of carrier dispersible, emulsifiable or soluble softening agent in an effective softening agent amount to give the moisture-reduced residue a glass transition temperature in the range of around 30°C to -20°C, wherein residues having Tgs greater than 0°C also have a solubility in organic solvent greater than 60 percent so that residues with higher Tgs have corresponding by higher solubility, and

3) carrier in an effective amount for application of the chemical treating composition to the glass fibers.

2. Chemically treated glass fibers, comprising:

a) low or free boron-containing glass fibers,

b) moisture-reduced residue of a chemical treating composition, having:

1) at least one aqueous soluble, emulsifiable or dispersible film forming polymer having a Tg of in the range of around 30°C to around -20°C, wherein polymers having Tgs greater than around 0°C also have a solubility in an organic solvent selected from the group comprising styrene and acetone of greater than around 60 percent so that polymers with higher Tgs have correspondingly higher solubilities, and where the polymer is present in an effective film forming amount,

2) amine functional organo silane coupling agent selected from monoamino functional and polyamino functional organosilanes and mixtures thereof in an effective coupling agent amount,

3) fiber lubricant selected from the group consisting of cationic and nonionic lubricants and mixtures thereof in effective lubricating amounts, and

4) water in an effective amount for application of the chemical treating composition having a solids content of around 1 to around 30 weight percent to the glass fibers.

3. Chemically treated glass fibers or strands of fibers of Claims 1 or 2, wherein the low or free-boron containing glass fibers are formed from an alkali metal aluminum oxide silica glass.

4. Strands or fibers of Claims 1, or 2 wherein in the chemical treating composition the softening agent is the presence of at least one film forming polymer which is soluble, dispersible or emulsifiable in the carrier, wherein the film forming polymer has a glass transition temperature in the range of 30°C to -20°C through internal or external plasticization.

5. Chemically treated strands or glass fibers of Claim 4, wherein at least one film forming polymer selected from the group consisting of homopolymers and copolymers of polyvinyl acetate, polyvinyl alcohol, saturated and unsaturated polyesters, epoxies, phenolic aldehyde resins, melamine aldehyde resins, polyacrylates, polymethacrylates which are modified by internal or external plasticization to have a Tg in the range of 30° to -20°C. and blends and mixtures of such modified polymers.

6. Chemically treated strands or glass fibers of Claim 4, wherein the film forming polymers present are epoxidized polyvinylacetate copolymer, plasticizer polyvinylacetate and polyvinylacetate in a blend according to Figure 1 where Y values are greater than that for the epoxy polyvinylacetate copolymer used alone.

7. Strands or fibers Claim 4 wherein the film forming polymer is poly(vinyl acetate) which is externally plasticized with phthalic esters.

8. Strand or fibers of Claims 1, or 2 wherein the carrier is water in an amount to give a solids content for the aqueous chemical treating composition in the range of 1 to 30 weight percent.

9. Strands or fibers of Claims 1, or 2, wherein the amine functional organo silane coupling agent is selected from the group consisting of monoamino functional and polyamino functional organo silanes and mixtures thereof.

10. Chemically treated strands or glass fibers of Claim 9, wherein the amine functional organo silane coupling agent is selected from the group consisting of gamma aminopropyltriethoxy silane, gamma-ethylene diamine alkyl trialkoxy silane, N-beta(aminoethyl)-gamma aminopropyltrimethoxy silane, and methyl [2-(gamma trimethoxy silylpropylamino)ethyl-amino]3-propionate.

11. Strands or fibers of Claims 1, or 2, wherein in the chemical treating composition there is present a non-silane organic coupling agent in an effective coupling agent amount.

12. Strands or fibers of Claims 1, or 2, wherein in the chemical treating composition there is present a fiber lubricant selected from the group consisting of cationic fiber lubricants, nonionic fiber lubricants and mixtures thereof.

13. Strands or fibers of Claims 1, or 2, wherein the amount of the moisture-reduced residue of the chemical treating composition present on the glass fibers is in the range from about 0.01 to about 5 weight percent LOI and the strands have a moisture content in the range of about 1 to about 12 weight percent.

14. Chemically treated strands or glass fibers of Claim 12, wherein the fiber lubricant is selected from the group consisting of saturated and unsaturated fatty acid amides, wherein the acid group contains from 4 to 24 carbon atoms and alkyl imidazoline derivatives including u-alkyl-N-amidoalkyl imidazolines formed by the reaction of fatty acids with polyalkylene polyamines under conditions to produce ring closure and nonionic lubricants including polyalkylene derivatives of esters, fatty acids, fatty alcohols, fatty amides, alkyl phenol ethers, hydrogenated and vegetable oils.

15. Choppable chemically treated glass fibers, comprising:

a) glass fibers having a low or free boron content formed from alkali metal aluminum oxide-silica glass,

b) moisture-reduced residue of an aqueous chemical treating composition having components other than water in weight percent of the solids of the aqueous chemical treating composition,

1) at least one film forming polymer selected from the group consisting of polyvinyl acetate film forming polymer plasticized to have a Tg of less than around 0°C, epoxy polyvinylacetate copolymer alone or in blends with polyvinylacetate, wherein the amount of the film forming polymer present is in the range of about 70 to about 90 weight percent,

2) a fatty acid amide lubricant in an amount in the range of about 1 to 7 weight percent

3) gamma-ethylene diamine alkyl trialkoxy silane in an amount in the range of about 1 to 6 weight percent,

4) vinyl-containing chromic halide coupling agent in an amount in the range of about 2 to about 6 weight percent,

wherein the aqueous chemical treating composition has an acidic pH greater than about 4 and a solids content of around 1 to 30 weight percent.

16. Choppable, chemically treated glass fibers of Claim 15, wherein the low or free-boron containing glass fibers have a composition consisting essentially of: 58 to 60 percent $SiO_2$; 11 to 13 percent $Al_2O_3$; 21 to 23 percent CaO; 2 to 4 percent MgO; 1 to 1.8 percent $TiO_2$ and alkali metal oxides selected from the group consisting of $Na_2O$ and potassium oxide up to about 1 percent, wherein all percentages are of by weight of the glass fiber composition.

17. Choppable, chemically treated glass fibers of Claim 15, wherein a blend of all three vinyl acetate film forming polymers is present in ratios according to Figure 1, where Y values are greater than that for the epoxy polyvinylacetate copolymer used alone.

18. Choppable glass fibers of Claim 15, wherein the aqueous chemical treating composition has a pH in the range of about 6.1 to about 6.5.

19. Choppable glass fibers of Claim 15, wherein the quantity of the moisture-reduced residue on the glass fibers is in the range of about 0.1 to about 5 weight percent LOI where the residue has a moisture content in the range of about 1 to about 15 weight percent.

20. Process of chopping the chemically treated glass fibers of Claim 16, in a gun roving spray-up operation, comprising:

a. feeding the continuous glass fiber strands of Claim 6 as roving into a chopping gun,

b. chopping the continuous glass fiber strands of Claim 6 in a chopping gun from which the chopped glass fiber strands contact sprayed matrix resin, and

c. depositing the chopped glass fibers and the sprayed matrix resin on a mold.

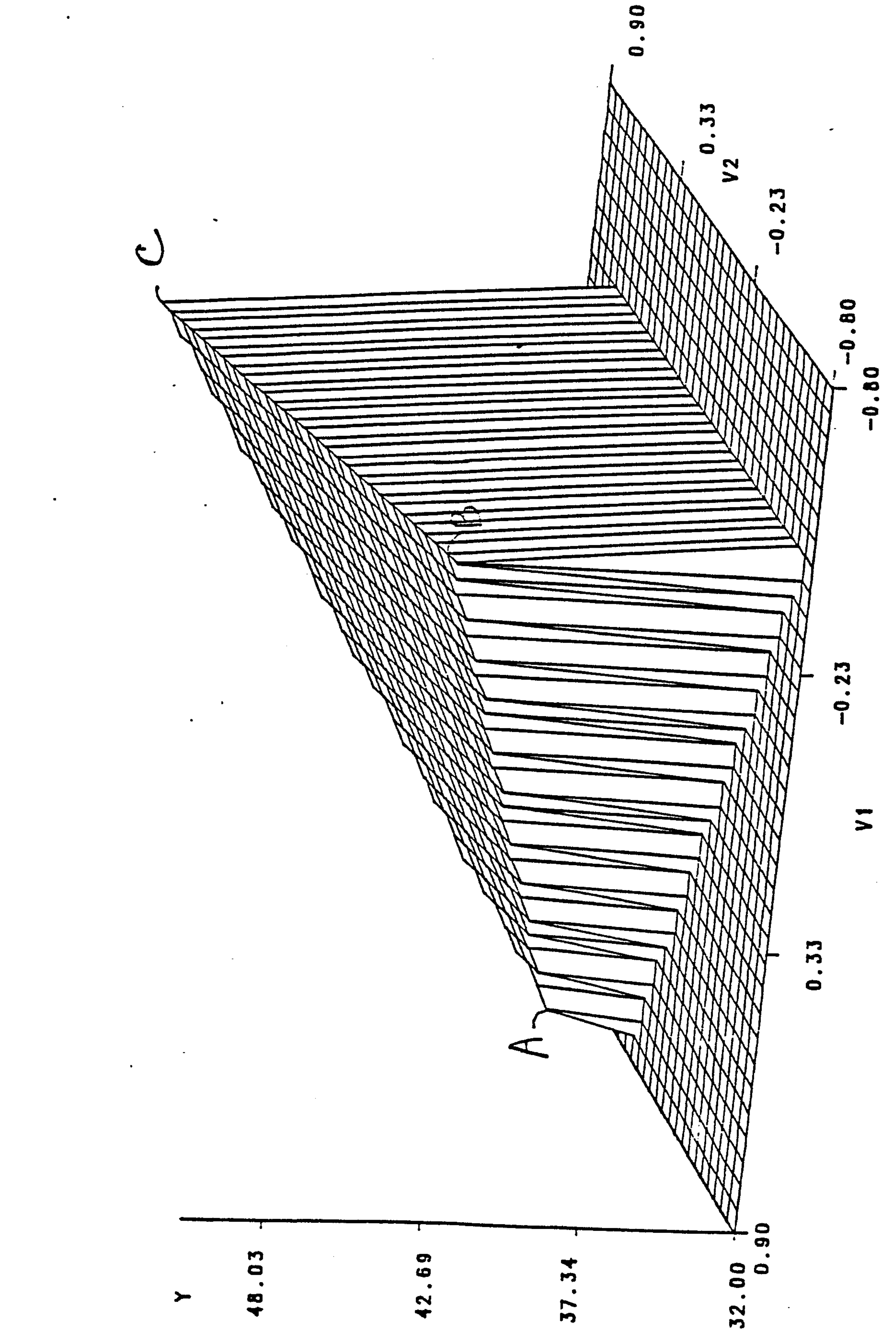


Figure 1

European Patent Office

# EUROPEAN SEARCH REPORT

Application Number

EP 87 11 9163

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-4 542 106 (J.F. SPROULL)<br>* Claim 1 *<br>--- | 1-20 | C 03 C 25/02 |
| Y | US-A-4 457 970 (B. DAS)<br>* Claim 1; table 1 *<br>--- | 1-20 | |
| Y | US-A-4 413 085 (C.S. TEMPLE)<br>* Claim 1; column 6, lines 15-22 *<br>----- | 1-20 | |

| TECHNICAL FIELDS SEARCHED (Int. Cl.4) |
|---|
| C 03 C |

The present search report has been drawn up for all claims

| Place of search | Date of completion of the search | Examiner |
|---|---|---|
| THE HAGUE | 12-04-1988 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document